# EUROPÄISCHE PATENTSCHRIFT

(11) **EP 0 549 753 B1**
(45) Veröffentlichungstag und Bekanntmachung des Hinweises auf die Patenterteilung: **18.12.1996**
(21) Anmeldenummer: 92914058.0
(22) Anmeldetag: 14.07.1992
(51) Int. Cl.: D06C 25/00, D03D 47/50, B26D 7/24

(54) **VERFAHREN UND WEBMASCHINE ZUR HERSTELLUNG EINER THERMISCH GESCHNITTENEN BAHN**
METHOD AND LOOM FOR PRODUCING A THERMALLY CUT WEB OF TEXTILE FABRIC
PROCEDE ET METIER A TISSER POUR LA FABRICATION D'UNE BANDE DE TEXTILE DECOUPEE PAR VOIE THERMIQUE

(30) Priorität: 18.07.1991 CH 2139/91
(43) Veröffentlichungstag der Anmeldung: 07.07.1993
(73) Patentinhaber: Textilma AG, CH-6052 Hergiswil (CH)
(72) Erfinder: SPEICH, Francisco, CH-5264 Gipf-Oberfrick (CH)
(74) Vertreter: Schmauder, Klaus Dieter
(86) Internationale Anmeldenummer: CH9200145
(87) Internationale Veröffentlichungsnummer: WO9302246

(56) Entgegenhaltungen:
- EP-A- 0 144 119
- WO-A-89/02491
- CH-A- 477 969
- CH-D- 123 070
- DE-A- 2 013 366
- DE-A- 2 502 724
- FR-A- 1 468 513
- GB-A- 1 300 434
- GB-A- 2 139 937
- US-A- 2 205 564
- US-A- 2 333 998
- US-A- 4 304 750
- US-A- 4 384 908

## Beschreibung

### Technisches Gebiet

Die Erfindung betrifft ein Verfahren zur Herstellung von Etikettenbändern gemäss Oberbegriff des Anspruches 1; sowie eine Webmaschine zur Durchführung des Verfahrens gemäss Oberbegriff des Anspruches 8.

### Stand der Technik

Verfahren und Webmaschinen der eingangs genannten Art sind mehrfach bekannt, so beispielsweise aus der WO-A-89/02491 und der EP-A-0 389 793. Bei diesen bekannten Verfahren und Webmaschinen wird die schmelzfähige Textilbahn mittels eines als Schneiddraht ausgebildeten beheizten Schneidgliedes geschnitten. Die beim Schneidvorgang an der Schnittstelle anfallende Schmelzmasse erzeugt einen verhältnismässig harten und rauhen Wulst bzw. eine Braue, welche das Aussehen und die Handhabung der geschnittenen Bahn beeinträchtigt. Gemäss der EP-A-0 389 793 wird versucht, diese Nachteile dadurch zu vermeiden, dass man die mit den Schmelzkanten versehenen Randbereiche der Bahn entlang von kantenparallelen Faltlinien umlegt und dadurch Faltschenkel bildet, worauf man die Faltschenkel an die angrenzenden Flächenzonen des zugehörigen Bahnstreifens flach andrückt und dort durch Kleben befestigt. Dieser Vorgang ist relativ kompliziert und es ergibt sich ein ebenfalls relativ dicker Randbereich der geschnittenen Bahn.

Aus der GB-A-1 300 434 ist es bekannt, um die beim Schneiden mit heissen Schneiddrähten verbundenen Nachteile zu beseitigen eine Schneidrolle mit einer beheizten umlaufenden Schneidkante zu verwenden, die mit einer Gegenwalze zusammenwirkt, zwischen denen die zu schneidende Textilbahn läuft. Beidseits der Schneidkante weist die Schneidrolle pressende Ränder auf, welche die Schnittränder während des Schneidens pressen und damit in der Dicke reduzieren. Zur Vermeidung eines Wiederverschweissens der geschnittenen Textilbahnen werden diese seitlich voneinander weg geführt. Die nach dem thermischen Schneiden noch plastische Schnittkante wird mittels einer nachfolgenden Presswalze geglättet und verfestigt. Dieses Verfahren und die Vorrichtung weisen von der vorliegenden Erfindung weg, da sie die Verwendung eines heissen Schneiddrahtes gerade vermeiden wollen. Ausserdem sind sie nur für einfache Gewebe gleichbleibender Dicke geeignet und nicht für so komplizierte Gebilde wie Etikettenbänder, welche wegen der Musterung eine sehr stark wechselnde Fadenanhäufung und damit eine stark wechselnde Dicke aufweisen, die mittels der bekannten Schneid- und Glättrolle nicht geschnitten werden können und überdies gewellte Ränder der Etikettenbänder liefern würden.

Aus der GB-A-2 139 937 ist es bekannt, einen thermisch geschnittenen Rand einer Gewebebahn einer Formgebung zu unterziehen, um die Brauen der Schnittkante zu glätten. Hierzu werden die Brauen mittels Schneidgliedern entfernt, welche auf dem Gewebe aufliegen und überstehende Brauen abschneiden und den Abfall nach oben oder seitlich zur Schnittkante abdrängen. Eine solche Massnahme ist für Etikettenbänder wegen deren kompliziertem Aufbau und Verlauf der Musterfäden und der damit verbundenen häufig wechselnden Dicke der Etikettenbänder völlig ungeeignet. Die geschnittenen und bearbeiteten Kanten sind ausserdem wellig und verleihen der geschnittenen Bahn kein schönes Aussehen.

### Darstellung der Erfindung

Aufgabe der Erfindung ist es, ein Verfahren und eine Webmaschine der eingangs genannten Art zu schaffen, mit denen die erwähnten Nachteile vermieden werden.

Die gestellte Aufgabe wird gelöst:
- bei dem eingangs genannten Verfahren durch die kennzeichnenden Merkmale des Anspruches 1;
- bei der eingangs genannten Webmaschine durch die kennzeichnenden Merkmale des Anspruches 8.

Das Verfahren lässt sich nicht nur bei geraden Schnitten sondern auch bei gekrümmten Schnitten anwenden.

Das gattungsgemässe Verfahren und die gattungsgemässe Webmaschine ermöglichen ein einwandfreies thermisches Zerschneiden der kompliziert aufgebauten Textilbahnen in Etikettenbänder und dadurch ein ausriffelfestes Verschweissen der geschnittenen Fäden der Etikettenbänder. Dadurch, dass die thermisch mittels eine heissen Schneiddrahtes geschnittenen Ränder der Etikettenbänder einer Formgebung unter Wärmeeinwirkung und nachfolgenden Thermofixierung unterworfen werden, werden die beim thermischen Schneiden entstehenden unschönen und störenden Brauen vollständig in den Randbereich der geschnittenen Bahn eingedrückt und es entsteht ein sauberer glatter Randbereich. Durch die Formgebung kann ein hochstehender Schmelzrand der geschnittenen Bahn flach gedrückt werden, so dass auch eine bedeutend bessere Biegbarkeit der geschnittenen Bahn erreicht wird, ohne dass an dem Schmelzrand der Schnittfläche Brüche entstehen. Dadurch werden die störenden Kratzeigenschaften eines nicht verformten Randes der geschnittenen Bahn praktisch vollständig beseitigt.

Durch die Möglichkeit der freien Formgebung des geschnittenen Randes der Bahn kann die Form der Schnittfläche, die Dicke des Schnittrandes und deren Oberflächenqualität sowie die Struktur der Schnittfläche nach Bedarf variiert und eingestellt werden. Dadurch ergeben sich völlig neue Qualitätsmerkmale einer geschnittenen Bahn und damit auch neue Anwendungsbereiche. Der Randbereich bzw. die Schnittfläche der geschnittenen Bahn kann sehr verschiedenartig geformt sein, so z.B. rund, kurvig, keilförmig, bandartig, dünn. Ausserdem kann die Schnittfläche mit einem Relief und/oder mit Zeichenstrukturen versehen werden.

Weiter ergibt die Erwärmung bei der Formgebung eine bedeutende Verbesserung des Schnittrandes der geschnittenen Bähn hinsichtlich der Beständigkeit und Widerstandfähigkeit des Schnittrandes gegen Ausriffeln.

Bei der Herstellung, eines Etikettenbandes ergeben sich weitere Vorteile dahingehend, dass das Grundgewebe von der Gutseite her, in den Farben des Grundgewebes homogen bleibt, d.h. es werden keine Mischfarben an der Schnittstelle sichtbar. Auch die Verdickungen, welche durch den thermischen Schnitt der Bahn entstehen, werden durch die Formgebung beseitigt bzw. können insbesondere bei einer schrägen Schnittfläche auf die Rückseite des Gewebes verlagert werden.

Schliesslich ermöglichen das Verfahren und die Webmaschine eine wesentliche Reduzierung der Anforderungen an die thermische Schneidvorrichtung, da der Schnitt nicht mehr so exakt ausgeführt werden muss, wie das bei fehlender Formgebung notwendig wäre. Dadurch lässt sich einerseits die Festigkeit des Schnittrandes verbessern und andererseits ist eine längere Standzeit des Schneidgliedes möglich. Trotzdem wird die Endqualität der geschnittenen Bahn stets gleichbleibend optimal sein.

Vorteilhafte Ausgestaltungen des Verfahrens sind in den Ansprüchen 2 bis 7 und der Webmaschine in den Ansprüchen 9 bis 13 beschrieben.

Der Rand der geschnittenen Bahn kann mit einer senkrechten Schnittfläche versehen werden, die quer zur Schnittrichtung einen Winkel von 90° mit der Ebene der Textilbahn bildet. Vorteilhafter ist jedoch eine Ausgestaltung nach Anspruch 2, wonach die Bahn mit einem Schrägschnitt versehen wird. Dies ergibt eine wesentlich grössere Schnittfläche, wobei die Schräge insbesondere auf die Rückseite der geschnittenen Bahn verlegt werden kann, so dass sie auf der Gutseite nicht sichtbar ist. Besonders gute Ergebnisse der Formgebung erzielt man, wenn nach Anspruch 3 mindestens die Breite der Schnittfläche durch die Formgebung erfasst wird. Die Formgebung einerseits und der verformte Randbereich andererseits lassen sich durch eine steuerbare Wärmezufuhr gemäss Anspruch 4 verbessern.

Die Formgebung ist auf verschiedene Arten möglich, so kann sie beispielsweise gemäss Anspruch 5 mit einer Walze oder einem Walzenpaar erfolgen. Auch eine Formgebung gemäss Anspruch 6 ist denkbar. Eine Formgebung nach Anspruch 7 erbringt den Vorteil, dass durch eine hohe Schwingfrequenz eine innere Erwärmung des Materials durch Reibwärme erzeugt wird, so dass auf eine zusätzliche Heizung verzichtet werden kann.

### Kurze Beschreibung der Zeichnungen

Ausführungsbeispiele des Gegenstandes der Erfindung werden nachfolgend anhand schematischer Zeichnungen näher beschrieben, dabei zeigen:
- Figur 1: eine Webmaschine zur Herstellung einer thermisch geschnittenen Bahn, im Längsschnitt;
- Figur 2: ein Schneidglied der thermischen Schneideinrichtung für einen senkrechten Schnitt, im Vertikalschnitt;
- Figur 3: ein Schneidglied der thermischen Schneideinrichtung für einen Schrägschnitt, im Vertikalschnitt;
- Figur 4: eine erste Formgebungs-Einrichtung mit einer profilierten Walze und einer glatten Walze, im Vertikalschnitt;
- Figur 5: eine zweite Formgebungs-Einrichtung mit zwei profilierten Walzen, im Vertikalschnitt;
- Figur 6: eine mit einem Schrägschnitt versehene Bahn, im Querschnitt;
- Figur 7: die geschnittene Bahn der Figur 6 mit geformten Schnittflächen, im Vertikalschnitt;
- Figur 8: eine weitere Formgebungs-Einrichtung mit einer dem Warenabzug zugeordneten Walze, im Vertikalschnitt und im Ausschnitt;
- Figur 9: die Formgebungs-Einrichtung der Figur 8 in Ansicht auf die Walze;
- Figur 10: eine weitere Formgebungs-Einrichtung mit einer dem Warenabzug zugeordneten Hammer-Einrichtung, im Vertikalschnitt und im Ausschnitt;
- Figur 11: die Formgebungs-Einrichtung der Figur 10 in Ansicht auf den Hammer, im Schnitt; und
- Figur 12: eine weitere Formgebungs-Einrichtung mit einer mit dem Warenabzug zugeordneten Ultraschall-Einrichtung, im Vertikalschnitt und im Ausschnitt.

### Wege zur Ausführung der Erfindung

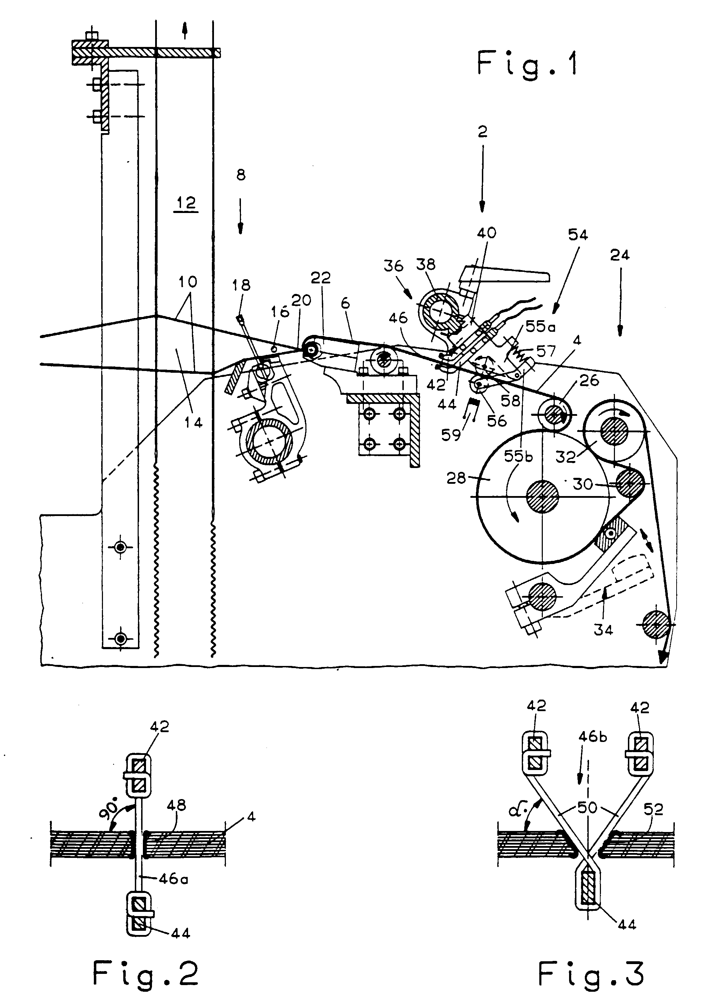

Die Figur 1 zeigt eine Webmaschine 2 zur Herstellung einer thermisch geschnittenen Bahn, insbesondere eines gemusterten Bandes 4, aus einer schmelzfähigen Textilbahn 6. Die in Figur 1 gezeigte Webmaschine dient insbesondere zur Herstellung gemusterter Etikettenbänder. Hierzu weist die Webmaschine eine Webstelle 8 auf, an der Kettfäden 10 mittels einer Fachbildevorrichtung 12 ein Kettfach 14 bilden, in das ein Schussfaden 16 in nicht näher dargestellter Weise eingebracht werden kann. Der Schussfaden 16 wird mittels eines Webblattes 18 an der Anschlagkante 20 der Textilbahn 6 angeschlagen. Die Textilbahn 6 wird dann über einen Warenniederhalter 22 zu einer Warenabzugsvorrichtung 24 geführt. Letztere enthält eine Umlenkwalze 26, welche mit einer Warenabzugswalze 28 zusammenwirkt, von der die Ware zu weiteren Umlenkwalzen 30,32 und schliesslich zu einem nicht näher dargestellten Warenbaum geführt wird. Der Warenabzugswalze 28 ist auf der Ablaufseite eine Thermofixier-Einrichtung 34 zugeordnet, um die Ware spannungsfrei zu machen und insbesondere den Kantenbereich zu glätten.

Zwischen dem Warenniederhalter 22 und der Warenabzugsvorrichtung 24 ist zunächst eine thermische Schneideinrichtung 36 angeordnet. Letztere enthält einen an einem Träger 38 verstellbar befestigten Halter 40, der Tragarme 42,44 hält, deren freie Enden gegen die Laufrichtung der Textilbahn 6 weisen und ein Schneidglied 46 tragen, welches beispielsweise gemäss den Figuren 2 oder 3 ausgebildet sein kann. Das Schneidglied 46a der Figur 2 bewirkt senkrechte Schnittflächen 48, die quer zur Schnittrichtung einen Winkel von 90° mit der Textilbahn 6 bilden. Das Schneidglied 46b der Figur 3 weist V-förmig angeordnete Schenkel 50 auf, die quer zur Schnittrichtung einen Winkel α mit der Textilbahn bilden, wobei 90° > α > 0° ist. Vorzugsweise beträgt der Winkel α = 45°. Es ergeben sich damit schräge Schnittflächen 52, die einen entsprechenden Winkel mit der Textilbahn bilden.

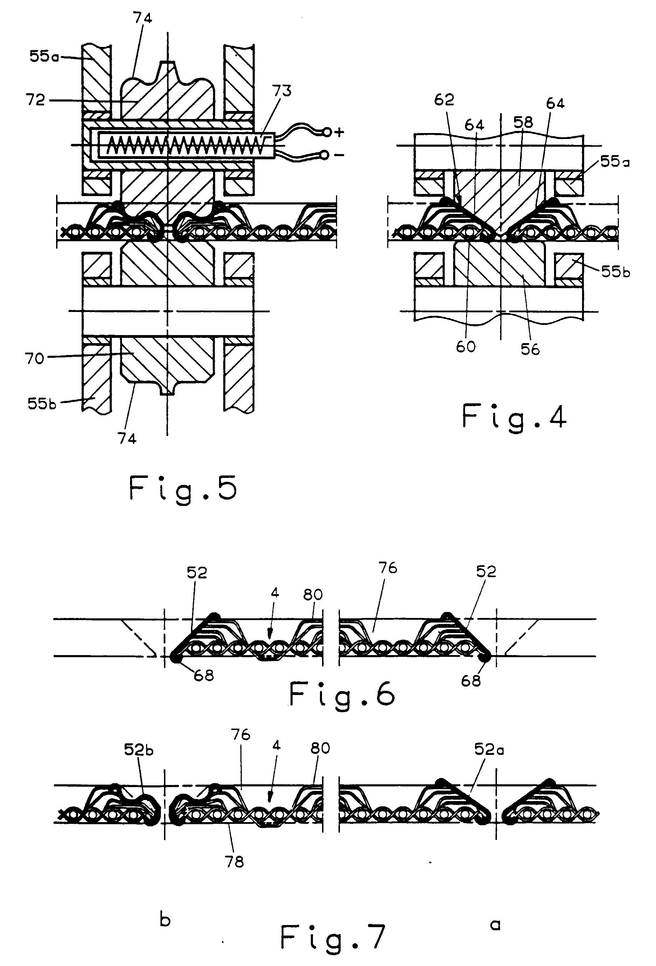

Der thermischen Schneideinrichtung 36 ist eine Formgebungs-Einrichtung 54 nachgeschaltet, die vorzugsweise mit der thermischen Schneideinrichtung 36 kombiniert ist, so dass die Formgebungs-Einrichtung 54 und die Schneideinrichtung 36 eine Einheit bilden. Hierzu sind am Halter 40 ein feststehender Arm 55a und ein schwenkbarer Arm 55b angeordnet, die mittels einer Feder 57 gegeneinander vorgespannt sind und jeweils eine Walze 56,58 tragen. Einer der Walzen ist eine Heizung 59 zugeordnet. Die Walzen können nach den Figuren 4 oder 5 ausgestaltet sein.

Gemäss Figur 4 besitzt die eine Walze 56 einen zylindrischen Mantel 60, während die andere Walze 58 einen profilierten Mantel 62 aufweist. Letzterer enthält zwei Kegelflächen 64, so dass eine schräge Schnittfläche 52 der in Figur 6 gezeigten Art mittels der Formgebungs-Einrichtung 54 stärker zusammengedrückt wird, wodurch die ursprünglich über die Ebene der Textilbahn vorstehenden Brauen 68 in die Textilbahn zurückgedrängt werden, wie aus Figur 7a hervorgeht. Ausserdem liegen dann die Schnittflächen 52a flacher.

Die Figur 5 zeigt eine weitere Ausbildung zweier Walzen 70,72, von denen eine eine Heizung 73 enthält und die jeweils einen profilierten Mantel 74 aufweisen, der nach der Formgebung den Schnittflächen 52b ein entsprechendes Profil verleihen, wie aus Figur 7b hervorgeht.

Die Formgebung der Schnittflächen 52,52a,52b bewirkt einerseits eine Verfestigung der Schnittstelle und andererseits dennoch eine Verfeinerung derselben, wobei insbesondere bei der schrägen Schnittfläche der Schmelzbereich der Schnittfläche auf die Rückseite 76 der Textilbahn 6 bzw. des Bandes 4 verlegt wird, so dass die Gutseite 78 der Textilbahn 6 bzw. des Bandes 4 durch die Schnittfläche 52,52a,52b praktisch nicht beeinflusst wird. Dies ist insbesondere bei gemusterten Textilbahnen für die Herstellung von gemusterten Etiketten von besonderer Bedeutung, bei denen die auf der Rückseite 76 der Textilbahn flottierenden Musterfäden 80 eine starke Fixierung erhalten und dennoch auf der Gutseite 78 diese Fixierung und insbesondere eine durch die Schmelze bedingte Farbmischung nicht sichtbar sind.

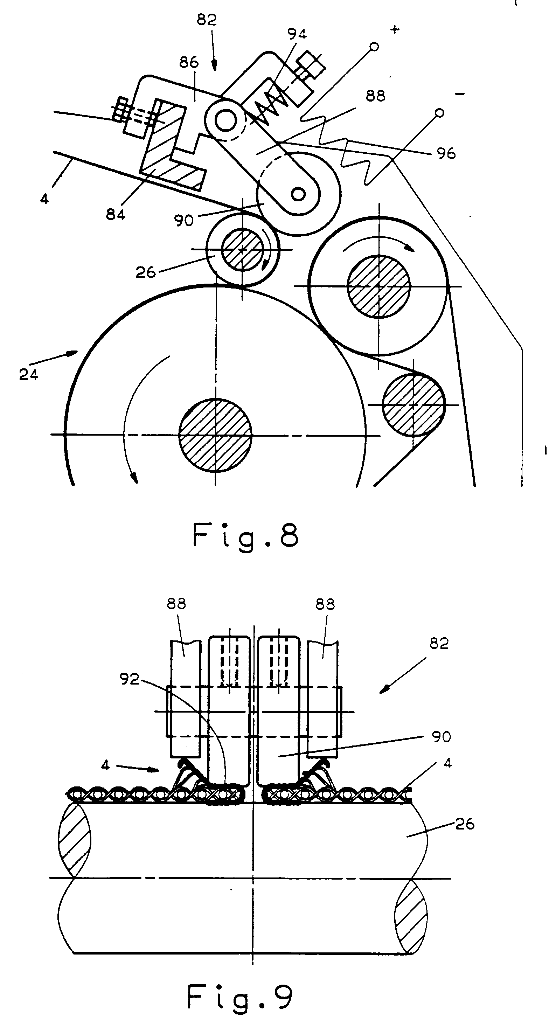

Die Figuren 8 und 9 zeigen eine weitere Formgebungs-Einrichtung 82, die mit der Warenabzugsvorrichtung 24 zusammenwirkt. Die Formgebungs-Einrichtung 82 enthält einen an einem über die Textilbahn reichenden Träger 84 angeordneten Halter 86, der an einem schwenkbaren Auslegearm 88 Walzen 90 trägt. Die Walzen 90 wirken mit einer Umlenkwalze 26 der Warenabzugsvorrichtung 24 zusammen, auf der die geschnittenen Bänder 4 geführt sind. Die Walzen 90 sind mittels einer Feder 94 gegen die Umlenkwalze 26 vorgespannt. Ferner ist eine Heizung 96 zur Aufheizung der Walzen 90 und zur Unterstützung der Formgebung vorgesehen. Die Walzen 90 verformen die Schnittränder 92 der Bänder 4.

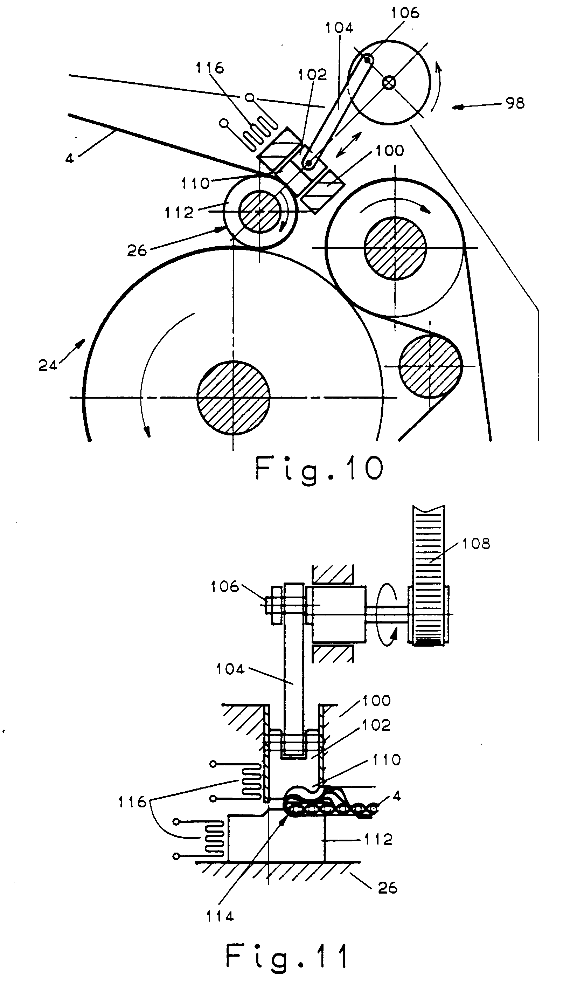

Die Figuren 10 und 11 zeigen eine weitere Formgebungs-Einrichtung 98, die ebenfalls mit einer Umlenkwalze 26 der Warenabzugsvorrichtung 24 zusammenwirkt. Die Formgebungs-Einrichtung 98 enthält einen in einem Halter 100 hin- und hergehend geführten Hammer 102, der über eine Pleuelstange 104 von einem umlaufenden Exzenter 106 angetrieben wird. Letzterer ist über einen Riementrieb 108 in nicht näher dargestellter Weise mit dem übrigen Antriebsmechanismus der Webmaschine verbunden. Der Hammer 102 ist mit einem profilierten Kopf 110 versehen, der mit einem profilierten Ring oder Walze 112 an der Umlenkwalze 26 zusammenwirkt und den zwischen dem Hammer 102 und dem Ring 112 geführten Schnittrand 114 eines Bandes 4 verformt. Eine Heizung 116 dient zur Unterstützung der Formgebung am Schnittrand 114. Die Formgebung kann gegebenenfalls durch Einstellung der Schlagzahl des Hammers weiter variiert werden.

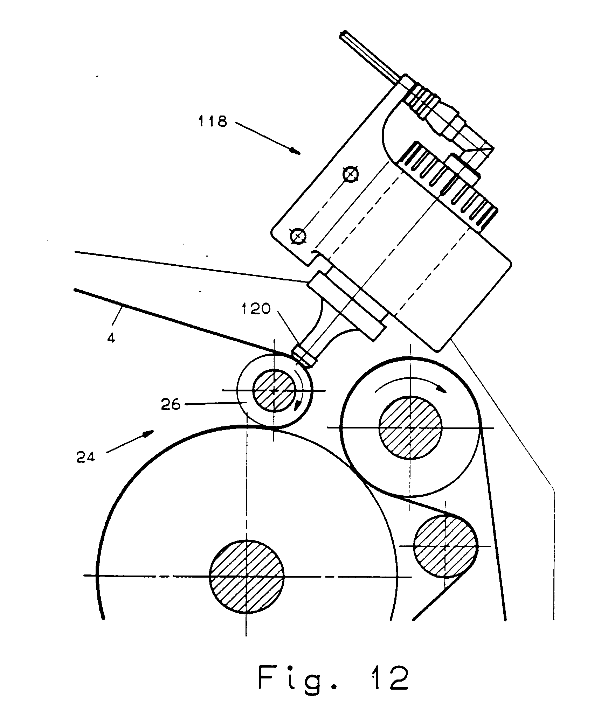

Die Figur 12 zeigt eine weitere Formgebungs-Einrichtung 118, welche wiederum mit einem Stempel 120 mit der Umlenkwalze 26 der Warenabzugsvorrichtung 24 zusammenwirkt. Die Formgebungs-Einrichtung 118 arbeitet nach dem Ultrasonic-Prinzip, wobei der Stempel 120 beispielsweise mit einer hohen Schwingfrequenz von z.B. 20 bis 40 kHz auf das geschnittene Band 4 einwirkt. Durch diese hohe Schwingungszahl wird im zu verformenden Schnittrand des geschnittenen Bandes 4 Reibwärme erzeugt, so dass eine zusätzliche Heizung nicht erforderlich ist. Die Formgebungseinrichtung 118 ermöglicht eine wirkungsvolle Formgebung des Schnittrandes eines geschnittenen Bandes.

### BEZUGSZEICHENLISTE

- 2: Webmaschine
- 4: Band
- 6: Textilbahn
- 8: Webstelle
- 10: Kettfaden
- 12: Fachbildevorrichtung
- 14: Kettfach
- 16: Schussfaden
- 18: Webblatt
- 20: Anschlagkante
- 22: Warenniederhalter
- 24: Warenabzugsvorrichtung
- 26: Umlenkwalze
- 28: Warenabzugswalze
- 30: Umlenkwalze
- 32: Umlenkwalze
- 34: Thermofixier-Einrichtung
- 36: Schneideinrichtung
- 38: Träger
- 40: Halter
- 42: Tragarm
- 44: Tragarm
- 46: Schneidglied
- 46a: Schneidglied
- 46b: Schneidglied
- 48: Schnittfläche
- 50: Schenkel von 46b
- 52: Schnittfläche
- 52a: Schnittfläche
- 52b: Schnittfläche
- 54: Formgebungs-Einrichtung
- 55a: Arm
- 55b: Arm
- 56: Walze
- 57: Feder
- 58: Walze
- 59: Heizung
- 60: zylindrischer Mantel
- 62: profilierter Mantel
- 64: Kegelflache
- 68: Braue
- 70: Walze
- 72: Walze
- 73: Heizung
- 74: profilierter Mantel
- 76: Rückseite
- 78: Gutseite
- 80: Musterfaden
- 82: Formgebungs-Einrichtung
- 84: Träger
- 86: Halter
- 88: Auslegearm
- 90: Walze
- 92: Schnittrand
- 94: Feder
- 96: Heizung
- 98: Formgebungs-Einrichtung
- 100: Halter
- 102: Hammer
- 104: Pleuelstange
- 106: Exzenter
- 108: Riemenantrieb
- 110: Kopf
- 112: Ring / Walze
- 114: Schnittrand
- 116: Heizung
- 118: Formgebungs-Einrichtung
- 120: Stempel

## Patentansprüche

1. Verfahren zur Herstellung von Etikettenbänder mit flottierenden Musterfäden, durch
- mustergemässes Weben einer Textilbahn (6) aus thermoplastischem Material;
- thermisches Schneiden der bewegten Textilbahn (6) mittels eines Schnittflächen (48,52,52a,52b) bildenden heissen Schneiddrahtes (46,46a,46b) in Etikettenbänder (4); und
- Thermofixieren der Etikettenbänder (4) innerhalb einer Warenabzugsvorrichtung (24),
dadurch gekennzeichnet,
dass man die Schnittflächen (48,52,52a,52b) enthaltenden Ränder der Etikettenbänder (4) nach dem thermischen Schneiden und vor dem Thermofixieren mittels eines sich an die Dicke des Etikettenbandes anpassenden, pressenden und/oder vibrierenden Werkzeuges einer spanlosen Formgebung unter Erwärmung unterwirft.

2. Verfahren nach Anspruch 1, dadurch gekennzeichnet, dass der Rand mit einem Schrägschnitt versehen wird, dessen Schnittfläche (52,52a,52b) quer zur Schnittrichtung einen Winkel 90° > α > 0° mit der Ebene der Textilbahn (6) bzw. der Ebene der Etikettenbänder (4) bildet.

3. Verfahren nach Anspruch 1 oder 2, dadurch gekennzeichnet, dass die Breite der Formgebung mindestens der Breite der Schnittfläche (48,52,52a,52b) entspricht.

4. Verfahren nach einem der Ansprüche 1 bis 3, dadurch gekennzeichnet, dass man die Formgebung unter steuerbarer Wärmezufuhr durchführt.

5. Verfahren nach einem der Ansprüche 1 bis 4, dadurch gekennzeichnet, dass man die Formgebung mittels einer Walze (56,58,70,72,90, 26), vorzugsweise eines gegeneinander wirkenden Walzenpaars (56,58,70,72,90,26) durchführt.

6. Verfahren nach einem der Ansprüche 1 bis 4, dadurch gekennzeichnet, dass man die Formgebung mittels einer Hammer-Einrichtung (102) durchführt.

7. Verfahren nach einem der Ansprüche 1 bis 4, dadurch gekennzeichnet, dass man die Formgebung mittels einer Vibrations-, insbesondere einer Ultraschall-Einrichtung (118) durchführt.

8. Webmaschine zur Durchführung des Verfahrens nach einem der Ansprüche 1 bis 7, mit einer Webvorrichtung zum mustergemässen Weben einer Textilbahn (6) aus thermoplastischem Material, mit einer nachgeschalteten, einen heizbaren Schneiddraht (46,46a,46b) aufweisenden, thermischen Schneidvorrichtung (36) zum Zerschneiden der Textilbahn (6) in Etikettenbänder (4) und mit einer folgenden, innerhalb einer Warenabzugsvorrichtung (24) angeordneten Thermofixier-Einrichtung (34) für die Etikettenbänder (4), dadurch gekennzeichnet, dass sie zwischen der thermischen Schneidvorrichtung (36) und der Thermofixier-Einrichtung (34) eine Einrichtung (54,82,98,118) mit einem sich an die Dicke des Etikettenbandes anpassenden, pressenden und/oder vibrierenden Werkzeuges zur spanlosen Formgebung unter Erwärmung der thermisch geschnittenen Ränder (48,52) der Etikettenbänder (4) aufweist.

9. Webmaschine nach Anspruch 8, dadurch gekennzeichnet, dass die thermische Schneideinrichtung (36) ein Schneidglied (46,46b) aufweist, welches quer zur Schnittrichtung einen Winkel 90° > α > 0° mit der Ebene der Textilbahn (6) bzw. mit der Ebene der Etikettenbänder (4) aufweist.

10. Webmaschine nach Anspruch 8 oder 9, dadurch gekennzeichnet, dass die Formgebungs-Einrichtung (54,82,98) eine steuerbare Heizung (59,73,96,116) enthält.

11. Webmaschine nach einem der Ansprüche 8 bis 9, dadurch gekennzeichnet, dass die Formgebungs-Einrichtung (54,82) eine Walze (56,58,70,72,90,26), vorzugsweise ein Walzenpaar (56,58,70,72,90,26) enthält.

12. Webmaschine nach einem der Ansprüche 8 bis 9, dadurch gekennzeichnet, dass die Formgebungs-Einrichtung (98) eine Hammer-Einrichtung (102) enthält.

13. Webmaschine nach einem der Ansprüche 8 bis 9, dadurch gekennzeichnet, dass die Formgebungs-Einrichtung (118) eine Vibrations-, insbesondere Ultraschall-Einrichtung enthält.

## Claims

1. Method for the production of label tapes having floating pattern threads, by
- patterned weaving of a textile web (6) of thermoplastic material;
- thermal cutting of the moving textile web (6) into label tapes (4) by means of a hot cutting wire (46, 46a, 46b) that forms cut faces (48, 52, 52a, 52b); and
- heat-setting of the label tapes (4) inside a fabric take-off device (24),
characterised in that:
the edges of the label tapes (4) that contain cut faces (48, 52, 52a, 52b) are subjected, after thermal cutting and before heat-setting, to shaping without further cutting, with heating, by means of a pressing and/or vibrating tool that adapts itself to the thickness of the label tape.

2. Method according to claim 1, characterised in that the edge is provided with an oblique cut, the cut face (52, 52a, 52b) of which forms an angle of 90° > α > 0° with the plane of the textile web (6) or with the plane of the label tapes (4) transversely to the cutting direction.

3. Method according to claim 1 or 2, characterised in that the width of the shaping corresponds to at least the width of the cut face (48, 52, 52a, 52b).

4. Method according to any one of claims 1 to 3, characterised in that the shaping is carried out with the controllable application of heat.

5. Method according to any one of claims 1 to 4, characterised in that the shaping is carried out by means of a roller (56, 58, 70, 72, 90, 26), preferably by a pair of counter-rotating rollers (56, 58, 70, 72, 90, 26).

6. Method according to any one of claims 1 to 4, characterised in that the shaping is carried out by means of a hammer device (102).

7. Method according to any one of claims 1 to 4, characterised in that the shaping is carried out by means of a vibration device, especially an ultrasound device (118).

8. Loom for carrying out the method according to any one of claims 1 to 7, having a weaving device for the patterned weaving of a textile web (6) of thermoplastic material, a downstream thermal cutting device (36) that has a heatable cutting wire (46, 46a, 46b) for cutting the textile web (6) into label tapes (4) and a subsequent heat-setting device (34) for the label tapes (4) that is arranged inside a fabric take-off device (24), characterised in that between the thermal cutting device (36) and the heat-setting device (34) the loom has a device (54, 82, 98, 118) having a pressing and/or vibrating tool that adapts itself to the thickness of the label tape for the shaping without further cutting, with heating, of the thermally cut edges (48, 52) of the label tapes (4).

9. Loom according to claim 8, characterised in that the thermal cutting device (36) has a cutting element (46, 46b) that has an angle of 90° > α > 0° with the plane of the textile web (6) or with the plane of the label tapes (4) transversely to the cutting direction.

10. Loom according to claim 8 or 9, characterised in that the shaping device (54, 82, 98) contains a controllable heating arrangement (59, 73, 96, 116).

11. Loom according to claim 8 or 9, characterised in that the shaping device (54, 82) comprises a roller (56, 58, 70, 72, 90, 26), preferably a pair of rollers (56, 58, 70, 72, 90, 26).

12. Loom according to claim 8 or 9, characterised in that the shaping device (98) comprises a hammer device (102).

13. Loom according to claim 8 or 9, characterised in that the shaping device (118) comprises a vibration device, especially an ultrasound device.

## Revendications

1. Procédé pour fabriquer des rubans d'étiquettes avec des fils de motif flottant par
- tissage d'une bande textile (6) en matière thermoplastique en fonction du dessin,
- découpage thermique de la bande textile (6) en mouvement à l'aide d'un fil de coupe (46, 46a, 46b) chauffant formant une surface de coupe (48, 52, 52a, 52b,) dans les rubans d'étiquettes (4), et
- fixation thermique des rubans d'étiquettes (4) dans le dispositif d'appel de tissu (24),
caractérisé en ce que
on soumet les lisières des rubans d'étiquettes (4) avec les surfaces de coupe (48, 52, 52a, 52b) après le découpage thermique et avant la fixation thermique, à un outil s'adaptant à l'épaisseur du ruban d'étiquette, pressant celui-ci et/ou vibrant, pour réaliser une mise en forme ou formage sans contrainte et avec chauffage.

2. Procédé selon la revendication 1,
caractérisé en ce que
la lisière reçoit une coupe en biais dont la surface de coupe (52, 52a, 52b) forme transversalement à l'installation de découpage, un angle α tel que 90°> α > 0° avec le plan de la bande textile (6) ou le plan des rubans d'étiquettes (4).

3. Procédé selon la revendication 1 ou 2,
caractérisé en ce que
la largeur de la mise en forme correspond au moins à la largeur des surfaces de coupe (48, 52, 52a, 52b).

4. Procédé selon l'une des revendications 1 à 3,
caractérisé en ce que
la mise en forme est faite avec apport commandé de chaleur.

5. Procédé selon l'une quelconque des revendications 1 à 4,
caractérisé en ce que
la mise en forme est faite à l'aide d'un cylindre (56, 58, 70, 72, 90, 26) de préférence d'une paire de cylindres (56, 58, 70, 72, 90, 26) qui coopèrent.

6. Procédé selon l'une des revendications 1 à 4,
caractérisé en ce que
la mise en forme est faite à l'aide d'une installation munie d'un marteau (102).

7. Procédé selon l'une des revendications 1 à 4,
caractérisé en ce que
la mise en forme est faite à l'aide d'une installation (118) vibrante notamment d'une installation à ultrasons.

8. Métier à tisser pour la mise en oeuvre du procédé selon l'une des revendications 1 à 7, comprenant un dispositif de tissage pour tisser une bande textile (6) en fonction du dessin, en matière thermoplastique, suivi d'une installation de découpage (36) thermique, comportant un fil de coupe (46, 46a, 46b) chauffant, pour découper la bande textile (6) en des rubans d'étiquettes (4) et en aval, une installation de thermofixage (34) prévue dans le dispositif d'appel de tissu (24) pour les rubans d'étiquettes (4),
caractérisé en ce que
entre l'installation de découpage thermique (36) et l'installation de thermofixage (34), il y a une installation (54, 82, 98, 118) avec un outil s'adaptant à l'épaisseur du ruban d'étiquettes, le comprimant et/ou vibrant pour mettre en forme sans contrainte et sous l'effet de la chaleur les bords à coupe thermique (48, 52) des rubans d'étiquettes (4).

9. Métier à tisser selon la revendication 8,
caractérisé en ce que
l'installation de découpage thermique (36) comporte un organe de coupe (46, 46b) faisant, transversalement à la direction de coupe, un angle α tel que 90° > α > 0° avec le plan de la bande textile (6) ou le plan des rubans d'étiquettes (4).

10. Métier à tisser selon la revendication 8 ou 9,
caractérisé en ce que
l'installation de formage (54, 82, 98) comporte un moyen de chauffage (59, 73, 96, 116) commandé.

11. Métier à tisser selon l'une des revendications 8 ou 9,
caractérisé en ce que
l'installation de formage (54, 82) comporte un cylindre (56, 58, 70, 72, 90, 26) et de préférence une paire de cylindres (56, 58, 70, 72, 90, 26).

12. Métier à tisser selon l'une des revendications 8 et 9,
caractérisé en ce que
l'installation de formage (98) comporte une installation à marteau (102).

13. Métier à tisser selon l'une des revendication 8 et 9,
caractérisé en ce que
l'installation de formage (118) comporte une installation vibrante notamment une installation à ultrasons.
